# EUROPÄISCHE PATENTSCHRIFT

(11) **EP 0 866 826 B1**
(45) Veröffentlichungstag und Bekanntmachung des Hinweises auf die Patenterteilung: **28.03.2001**
(21) Anmeldenummer: 96943074.3
(22) Anmeldetag: 10.12.1996
(51) Int. Cl.: C08G 69/04, C08G 69/16, C08G 69/28, C08G 69/36

(54) **VERFAHREN UND VORRICHTUNG ZUR VEREINHEITLICHTEN, KONTINUIERLICHEN HERSTELLUNG VON POLYAMIDEN**
PROCESS AND DEVICE FOR THE STANDARDISED CONTINUOUS PRODUCTION OF POLYAMIDES
PROCEDE ET DISPOSITIF DE PRODUCTION CONTINUE ET STANDARDISEE DE POLYAMIDES

(30) Priorität: 12.12.1995 DE 19546417
(43) Veröffentlichungstag der Anmeldung: 30.09.1998
(73) Patentinhaber: POLYMER ENGINEERING GmbH, 07407 Rudolstadt (DE)
(72) Erfinder: WILTZER, Karlheinz, D-07422 Bad Blankenburg (DE); LAUSMANN, Peter, 07407 Rudolstadt (DE); EBERT, Baldur, D-07422 Bad Blankenburg (DE)
(74) Vertreter: Feldkamp, Rainer, Dipl.-Ing.
(86) Internationale Anmeldenummer: EP9605514
(87) Internationale Veröffentlichungsnummer: WO9721758

(56) Entgegenhaltungen:
- EP-A- 0 098 412
- EP-A- 0 129 195
- EP-A- 0 288 893
- EP-A- 0 393 546
- FR-A- 2 297 875

## Beschreibung

Die Erfindung betrifft ein Verfahren und eine Vorrichtung zur Durchführung eines Verfahrens zur kontinuierlichen Herstellung insbesondere von Polyamid 6, Polyamid 6.6 und von Copolyamiden aus ε-Caprolactam und/oder adipinsaurem Hexamethylendiamin oder Adipinsäure und Hexamethylendiamin. Es ist bekannt, die Herstellung von Polyamid 6, Polyamid 6.6 und von Copolyamiden in jeweils speziell den Erfordernissen des Produkts angepaßten Abläufen und mit einer auf einen optimalen Verfahrensablauf zugeschnittenen Vorrichtungsanordnung vorzunehmen.

Bei der Polymerisation von ε-Caprolactam laufen Hydrolyse-, Polyadditions- und Polykondensationsreaktionen ab, deren günstigste Reaktionsgeschwindigkeiten bei jeweils anderen Bedingungen liegen. Die Hydrolyse von ε-Caprolactam zu ε-Aminocapronsäure ist die erste und langsamste Reaktion des Polymerisationsprozesses. Zweckmäßigerweise wird in der ersten Verfahrensstufe die Hydrolyse bei hohen Temperaturen und hohen Wassergehalten des Reaktionsgemisches durchgeführt, um die größtmögliche Hydrolysegeschwindigkeit zu nutzen.
Dieser Prozeß setzt die Durchführung in einer Druckstufe voraus. Es entsteht ein niederviskoses Produkt.
In dieser Druckstufe erfolgt üblicherweise eine Viskositäts-begrenzung durch die zugegebene Wassermenge. Um die für die Verarbeitung des Polymeren notwendige Viskosität zu erreichen, wird das in der Druckstufe im Überschuß zugegebene Wasser in einer oder mehreren nachfolgenden drucklos betriebenen Verfahrensstufen ausgetrieben.
Die Einstellung der gewünschten Viskosität erfolgt durch Zugabe von Kettenabbrechern zu Beginn des Polymerisationsprozesses und durch gezielte Temperaturführung in den einzelnen Reaktionsschritten (DD-PS 133 681).
Für die Polymerisation von adipinsaurem Hexamethylendiamin oder Adipinsäure und Hexamethylendiamin wird bekannterweise als Ausgangsprodukt eine wäßrige AH-Salzlösung, die in einem Druckreaktor auf eine Temperatur im Bereich 220-280°C erwärmt wird, eingesetzt, mit dem Ziel, ein AH-Salz-Vorkondensat herzustellen, bei welchem die NH₂-Gruppen des Hexamethylen-diamins nahezu vollständig mit den COOH-Gruppen der Adipinsäure reagiert haben. Bekannt ist auch, daß die wäßrige adipinsaure Hexamethylendiaminlösung unter Druck, bei gleichzeitiger Verdampfung des Wassers erwärmt wird, das ausgetriebene Diamin in einer Kolonne zurückgehalten und dem Polymerisationsprozeß wieder zugeführt wird. Bei der Entspannung eines solchen Vorkondensates kann Hexymethylendiamin kaum mehr entweichen und es wird kein viskositätsabsenkender Säureüberschuß erzielt. Eine Entwässerung und Nachkondensation der Polyamid 6.6-Schmelze wird im Prinzip wie bei der Herstellung von Polyamid 6 .vorgenommen. Die Entwässerungsstufe ist allerdings auf eine wesentlich umfassendere Entwässerung einzustellen und zu dimensionieren (US-PS 2 689 839) ; DE-OS 2 401 474).
Bekannte Verfahren zur Herstellung von Copolyamiden aus wäßriger AH-Salzlösung und ε-Caprolactam gehen davon aus, daß die Herstellung in barometrischen Reaktoren, sogenannten VK-Rohren, vorgenommen wird. Bei diesen Verfahren können aber nur maximal 8% AH-Salz dem ε-Caprolactam zugesetzt werden.
Eine Prozeßführung mit hohem Wassergehalt, bedingt durch die wäßrige AH-Salzlösung, die in der Regel einen Feststoffanteil von 50 bis 65 Gewichts-% aufweist, ist schwer zu beherrschen und führt bei Zusätzen > 8% AH-Salzlösung zu erheblichen Qualitätsschwankungen durch ungleichmäßige Wasserverdampfung und trotz Rektifizierkolonne auf dem VK-Rohr werden unterschiedliche Mengen an Hexamethyldiamin ausgetragen. In einer Druckstufe entstehendes Vorkondensat aus adipinsaurer Hexamethylendiaminlösung wird deshalb in einem nachgeschalteten, barometrisch betriebenen Reaktor mit geschmolzenem Caprolactam gemischt und man erhält bei fortlaufender Polymerisation ein Copolyamid. Dieses Verfahren bedingt, daß ε-Caprolactam der wäßrigen AH-Salzlösung aber nur in Mengen bis 50 % zugegeben werden kann (DE-OS 3 912 768).
Nachteil dieses Verfahrens ist es, daß man hier:
- ein Vorkondensat höherer Viskosität mit einem niederviskosen Produkt, dem s-Caprolactam mischt, wobei diese Mischung zu einem ungleichmäßigen Polymerisat führt,
- nur 50 % ε-Caprolactam mit einer wäßrigen AH-Salzlösung reagieren kann, während für den Polyamidverarbeiter aber Lactamzusätze zwischen 75 und 98 % interessant sind.

Die Europäische Patentanmeldung 0 393 546 beschreibt ein Verfahren zur kontinuierlichen Herstellung von Copolyamiden, wobei eine wäßrige Lösung von Diaminen und Dicarbonsäuren unter Druck und Verdampfung von Wasser einer Vorkondensation unterworfen wird. In einer weiteren Verfahrensstufen wird die Dampfphase vo der Präpolymerschmelze getrennt. Diese Schmelze wird mit Caprolactam vermischt und in einem senkrecht stehenden Rohr dem Polymerisationsprozeß zugeführt, um dadurch ein Copolyamid zu erhalten.

Der Stand der Technik ist so, daß für jedes Polymere ein eigens dafür entwickelter Reaktortyp eingesetzt wird.
Dieser Nachteil soll durch die Erfindung gelöst werden.

Ziel und Aufgabe der Erfindung ist es, einen Polymerisationsreaktor so zu gestalten, daß in diesem Polyamid 6, Polyamid 6.6 und ein Copolyamid aus Caprolactam und einer wäßrigen AH-Salzlösung hergestellt werden kann. Es steht gleichzeitig die Aufgabe, in einem kontinuierlichen Verfahren Polyamid 6, Polyamid 6.6 und Copolymere nach einem vereinheitlichten Reaktionsablauf herzustellen. Dazu sollen die Reaktoren derart gestaltet werden, daß die gleichartigen Prozeßstufen in einem einheitlichen Reaktor durchgeführt werden können, wobei diese Reaktoren der unterschiedlichen Verfahrensführung anzupassen sind.
Diese Aufgabe wird durch die im Patentanspruch 1 und 8 angegebenen Merkmale gelöst.
Vorteilhafte Ausgestaltungen und Weiterbildungen der Erfindung ergeben sich aus den Unteransprüchen.
Die Prozeßführung bei der Herstellung der Polymere Polyamid 6, Polyamid 6.6 und Copolyamide wurde für einen Einheitsreaktor erfindungsgemäß so gestaltet, daß diese Polyamide in den einzelnen Behandlungsstufen alternierend in den Reaktionsapparaten durchgeführt werden können.
In einem solchen Polymerisationsreaktor werden die folgenden Verfahrensstufen durchgeführt:
a) Vorwärmung der Ausgangsprodukte in einem gemeinsamen Wärmetauscher,
b) Polymerisation der Ausgangsprodukte in einer Druckstufe mit oder ohne Wasseraustreibung, indem unter Wasseraustreibung in einer Rektifizierkolonne jeweils das Caprolactam oder das Diamin oder bei der Herstellung des Copolyamides diese beiden Produkte direkt in die Druckstufe zurückgeführt werden,
c) Entwässerung der polymeren Schmelze in einer ein- bis fünfgängigen Rohrschlange, in welcher die polymere Schmelze einem gezielten, langsamen Druckabbau unterzogen wird, wobei diese Rohrschlange so gestaltet wurde, daß sowohl das höherviskose Polyamid 6-Vorpolymerisat als auch das unter einem höheren Druck stehende niederviskose Polyamid 6.6-Vorkondensat sowie das Copolymerisat problemlos in den bei annähernd barometrischem Druck betriebenen ersten Nachkondensationsreaktor gefördert oder gedrückt wird,
d) erste Nachkondensation in einem gemeinsamen, senkrechten Reaktor bei Temperaturen im Bereich 210 - 285°C und bei einer Prozeßführung von oben nach unten, indem dünne Schmelzefilme gebildet und das für den weiteren Polymerisationsprozeß nicht mehr benötigte Wasser ausgetrieben wird,
e) weitere Nachkondensation der Schmelze in nachgeschalteten Reaktoren, sobald hohe Viskositäten zu erreichen sind. Erfindungsgemäß wird alternierend Polyamid 6 oder Polyamid 6.6 oder Copolyamid hergestellt und dazu der zu behandelnde Ausgangsstoff ε-caprolactam, adipinsaures Hexamethylendiamin, Adipinsäure und Hexamethylendiamin allein oder in Mischung gebracht, vorgewärmt in den Druckreaktor eingetragen. Im Druckreaktor wird in Abhängigkeit von der Polyamidart mit variablen Drücken, Temperaturen und Verweilzeiten die Polymerisation vorgenommen, wobei der Druck maßgeblich durch das im Reaktionsgemisch vorliegende Wasser gebildet und die Temperaturführung im Bereich von 150 bis 280°C gehalten wird.

Nach Erfordernis wird eine Entwässerung des Vorkondensats der Polyamidarten bei gleichzeitiger.Rückführung von Ausgangsprodukten über eine aufgesetzte Rektifizierkolonne durchgeführt und der Druck im Druckreaktor auf < 2,1 MPa eingestellt. Die Schmelze wird nachfolgend in mindestens einem Reaktor nachkondensiert, indem eine wasserüberschußabhängige Schmelzenniveaueinstellung vorgenommen und das im Überschuß in Vorpolymerisat oder Vorkondensat enthaltene Wasser auf auf den Anteil ausgetrieben wird, der zur Einstellung der Endviskosität in der Schmelze verbleibt. Die Einstellung eines Polymerisationsgleichgewichts in der Nachkondensation bei einem Druck zwischen 0,1 und 0,15 MPa wird bei Temperaturen im Bereich 210 bis 285°C durchgeführt.
Der Ausgangsstoff wird über ein Vorlagegefäß für ε-Caprolactam und/oder einem Vorlagegefäß für AH-Salzlösung oder eine Löseeinrichtung für AH-Salz, mit diskontinuierlichem oder kontinuierlichem Eintrag der Ausgangsstoffe, einer Förder- und Meßeinrichtung kontinuierlich zugeführt und anschließend der Ausgangsstoff oder das Stoffgemisch durch einen Wärmetauscher geleitet.
In einem gemeinsamen Wärmetauscher wird der Ausgangsstoff, auch in Verbindung mit der für eine Teilverdampfung überschüssigen Wassers notwendigen Energie, auf eine Temperatur zwischen 190 und 300°C vorgewärmt und so in den Druckreaktor eingetragen.
Für die Herstellung von Polyamid 6.6 und Copolyamiden wird eine wäßrige Lösung von adipinsaurem Hexamethylendiamin oder Adipinsäure und Hexamethylendiamin mit einem Wasseranteil ≤ 40% eingesetzt.
Die Prozeßführung im Druckreaktor wird temperaturseitig in Abhängigkeit des Anteiles an Caprolactam und Hexamethylendiamin im Reaktionsprodukt definiert im Bereich zwischen 190 und 280°C vorgenommen, wobei minimal eine Reaktionsgemischeintrittstemperatur von 190°C bei 40% AH-Salzanteil und die Temperatur oberhalb von 230°C bei Steigerung des AH-Salzanteiles auf 75% eingestellt wird. Bei einem Anteil von 90% AH-Salz im Reaktionsgemisch wird eine Temperatur bis 250°C eingestellt.
Bei der Herstellung von Copolyamid aus ε-Caprolactam mit einem Anteil von 1 bis 99% und wäßriger AH-Salzlösung wird erst bei einem Druck > 0,6 MPa das überschüssige Wasser im Druckreaktor abgeführt.
Die bei einer Entwässerung von Vorkondensat den Druckreaktor verlassende Ausgangsproduktteile werden über eine Rektifizierkolonne in diesen zurückgeführt und überschüssiges Wasser über eine Kondensation und Abtauchung abgeleitet.
Die Kühleinrichtung der Rektifizierkolonne wird dazu vorzugsweise in den Rohrkreislauf des Vorlage- oder Lösegefäßes für AH-Salzlösung eingebunden.
Die Entwässerung der polymeren Schmelze wird nach einer Druckminder- und Fördereinrichtung in einer ein- bis fünfgängigen Rohrschlange durch gezielten langsamen Druckabbau in einer Schmelzetrocknungsstrecke vorgenommen und durch diese das höherviskose Polyamid 6-Vorpolymerisat oder auch das unter höherem Druck stehende Polyamid 6.6-Vorkondensat oder Copolymerisat in den Nachkondensator gefördert.
Die Nachkondensation der polymeren Schmelze wird in einem senkrechten Reaktor unter Verwendung oberflächenvergrößernder Elemente und vom Ausgangsstoff abhängiger Niveauregelung bei Temperaturen im Bereich 210 bis 285°C und bei einer annähernd barometrischen Prozeßführung von oben nach unten, vorzugsweise unter zusätzlichem Einsatz von vorgewärmten Stickstoff, vorgenommen. Je höher der Wasserüberschuß der eingetragenen Schmelze, umso niedriger wird ein Produktniveau im Nachkondensationsreaktor eingestellt und die Schmelzeentgasungsfläche vergrößert.
Das überschüssige Wasser wird über Rektifikator und Abtauchung abgeführt und das Produkt mittels Austragspumpe am Boden des Nachkondensationsreaktors entnommen. Mit dieser Apparategestaltung ist es möglich, auch ein Copolyamid herzustellen, welches einen Caprolactamanteil von 1 bis 99% hat.
Die Erfindung soll anhand nachstehend aufgeführter Ausführungsbeispiele und unter Verwendung einer Zeichnung näher erläutert werden.

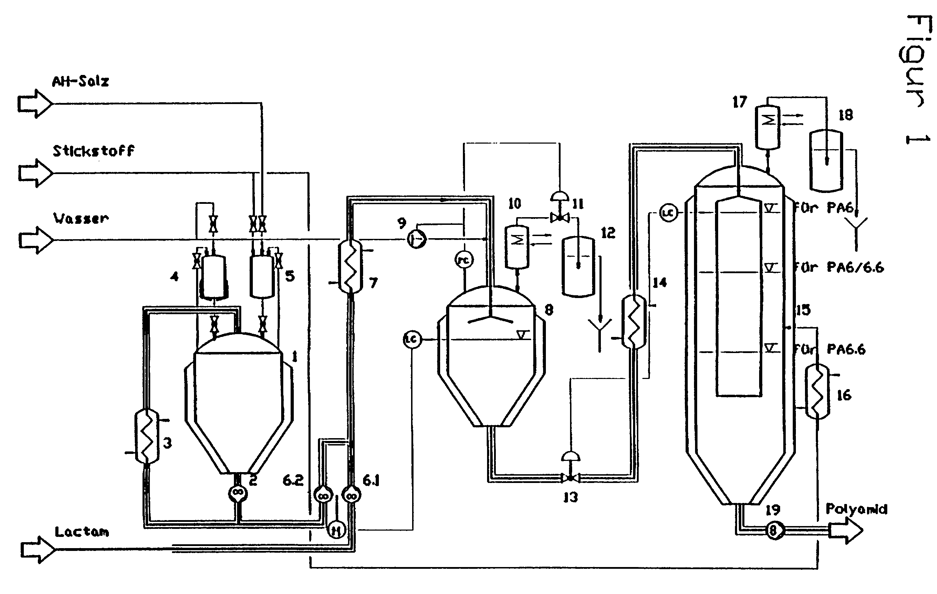

Die Fig. 1 zeigt in einer schematischen Darstellung die erfindungsgemäße Anordnung der Stufen eines einheitlichen Reaktors für die kontinuierliche Herstellung von Polyamid 6, Polyamid 6.6 und Copolyamide.

### Ausführungsbeispiel 1

Es wird hier ein Verfahren und eine Vorrichtung beschrieben, wobei ε-Caprolactam zu Polyamid 6 umgesetzt wird.
Aus einem Lagertank wird ε-Caprolactam durch den Pumpenkopf 6.1 über den Wärmetauscher 7 in den Druckreaktor 8 dosiert. Die Aussteuerung des Antriebes des Pumpenkopfes 6.1 erfolgt durch das Niveau des Reaktionsgemisches im Druckreaktor 8. Im Wärmetauscher 7 wird das ε-Caprolactam auf eine Reaktionstemperatur von etwa 240°C aufgewärmt. Das für die Hydrolyse des ε-Caprolactams benötigte Wasser wird durch die Zuführung für Wasser 9, in Abhängigkeit des im Druckreaktor 8 anliegen-Druckes, dem ε-Caprolactam vor Eintritt in diesen zugesetzt.
Es wird im Druckreaktor 8 eine Viskosität von 1,55 eingestellt (Lösungsviskosität bezogen auf Polymer-Schwefelsäure-Lösung mit 1g Polyamid in 100ml 96%iger Schwefelsäure).
Diese Prozeßstufe wird ohne Entgasung gefahren, obwohl der Druckreaktor 8 einen Gasraum aufweist.
Die niederviskose Polyamid 6-Schmelze wird über eine sogenannte Schmelzetrocknungsstrecke 14 in den barometrisch betriebenen Nachkondensationsreaktor 15, mittels des im Druckreaktor 8 anliegenden Druckes von 0,7 MPa, eingetragen.
Der mengengeregelte Eintrag erfolgt über die Druckminder- und Fördereinrichtung 13, welche vom Produktniveau des Nachkondensationsreaktors 15 angesteuert wird.
Um das Wasser in der Schmelze bei der Entspannung in der Rohrleitung zwischen Druckminder- und Fördereinrichtung 13 und Nachkondensationsreaktor 15 zu verdampfen und dabei die Polyamidschmelze auf der gewünschten Temperatur zu halten, wird dieser in der Schmelzetrocknungsstrecke 14 die notwendige Wärme zugeführt. Die Schmelze wird im Nachkondensationsreaktor 15 zur Erzielung einer größtmöglichen Schmelzeoberfläche über eine senkrecht angeordnete Streckmetallfläche gleichmäßig verteilt. Entgegengesetzt des Schmelzeablaufes wird über den Wärmetauscher 16 auf 270°C vorgewärmter Stickstoff eingetragen, der über die Schmelzeoberfläche und durch die Schmelzeschicht geleitet, im wesentlichen Lactam und das im Überschuß vorhandene Wasser mitnimmt. Im Rektifikator 17 wird eine Trennung des Gasgemisches vorgenommen, wobei ε-Caprolactam in den Nachkondensationsreaktor 15 zurückgeführt und Stickstoff und Wasser über die Abtauchung 18 aus dem Prozeß abgeführt werden. Im Nachkondensationsreaktor 15 wird eine Lösungsviskosität von 2,5 erhalten. Die Schmelze wird mit der Austragspumpe 19, einer Zahnradpumpe, aus dem Reaktor ausgetragen und einer Granulierung zugeführt.

### Ausführungsbeispiel 2

Aus ε-Caprolactam und adipinsaurem Hexamethylendiamin (AH-Salz) soll erfindungsgemäß ein Copolyamid hergestellt werden.
Im Lösegefäß 1 werden dazu 80 Gewichtsteile AH-Salz und 20 Gewichtsteile Wasser aufgeschmolzen. Eine Zuführung der Aufschmelzwärme erfolgt über den Wärmetauscher 3 durch Führung des Ansatzes über diesen mittels der Pumpe 2. Diesem Produktkreislauf wird kontinuierlich mit dem Pumpenkopf 6.2 die für den Polymerisationsprozeß notwendige wäßrige AH-Salzlösung entnommen.
Die Zuführung von Wasser und AH-Salz in das Lösegefäß 1 erfolgt diskontinuierlich. Im Zwischengefäß für Wasser 4 wird Wasser auf >100°C aufgeheizt und im Behälter für AH-Salz 5 wird die notwendige Menge an AH-Salz vorgelegt. Während durch Öffnen der Auslaßventile das vorgewärmte Wasser in das Lösegefäß 1 gelangt, wird AH-Salz mittels Stickstoff in dieses Gefäß gedrückt. Die Beheizung des Lösegefäßes 1, des Wärmetauschers 3 und des Zwischengefäßes für Wasser 4 erfolgt über einen Wärmeträger.
Lactam und AH-Salzlösung werden über getrennte Pumpenköpfe 6.1 und 6.2, die über einen gemeinsamen Antrieb verfügen, gefördert. Vor Eintritt in den Wärmetauscher 7 werden beide Produkte miteinander vermischt. Es werden 18 Teile der wäßrigen AH-Salzlösung und 82 Teile ε-Caprolactam dosiert, welche im Wärmetauscher 7 vorgewärmt werden.
Im Druckreaktor 8 entsteht ein niederviskoses Copolyamid, dessen Viskosität durch gezieltes Austreiben von Wasser gesteuert werden kann. Im Druckreaktor 8 wird ein Druck von 1,1 MPa eingestellt und das-überschüssige Wasser druckgeregelt über das Regelventil 11 und die Abtauchung 12 aus dem Prozeß abgeführt. In der Rektifizierkolonne 10 werden vom Wasser adipinsaures Hexamethylen und Lactam abgetrennt und dem Reaktionsgemisch in der Druckstufe 8 wieder zugeführt. In dieser Druckstufe entsteht ein Polymerisat mit einer Lösungsviskosität von 1,38.
In der Schmelzetrocknungsstrecke 14 wird die Copolyamidschmelze auf 280°C aufgewärmt Da bei diesem Produkt der Wasseranteil im Polymeren größer ist als bei Einsatz von ε-Caprolactam allein, wird die Entgasungsfläche der Schmelze im Nachkondensationsreaktor 15 größer ausgebildet, indem das Produktniveau im Reaktor abgesenkt wird. Für das Austreiben von durch Polykondensation entstehendem Wasser wird heißer Stickstoff, der im Wärmetauscher 16 vorgewärmt wurde, durch den Nachkondensationsreaktor 15 geleitet. Im Dephlegmator 17 erfolgt eine Trennung des Gasgemisches. Während Lactam und adipinsaures Hexamethylendiamin in den Nachkondensationsreaktor 15 zurückgeführt werden, verlassen Stickstoff und Wasser über eine Abtauchung 18 den Polymerisationsprozeß.
Es wird Copolyamidschmelze, die eine Lösungsviskosität von 2,38 aufweist, mittels Austragspumpe 19, einer Zahnradpumpe, aus dem Nachkondensationsreaktor 15 ausgetragen. Das Copolyamid hat einen Schmelzpunkt von 195°C.
Anstelle einer 80%-igen wäßrigen AH-Salzlösung kann auch eine wäßrige AH-Salzlösung mit einer handelsüblichen Konzentration von 60% eingesetzt werden, wodurch der vorangehend beschriebene Löseprozeß vor dem Pumpenkopf 6.2 entfallen würde. Dieser Vorteil ist jedoch verbunden mit einem erheblich größerem Energiebedarf.

### Ausführungsbeispiel 3

Die Stoffe Adipinsäure und Hexamethylendiamin sollen erfindungsgemäß zu dem Polymeren Polyamid 6.6 umgesetzt werden. Es wird eine etwa 60%-ige wäßrige AH-Salzlösung eingesetzt, die im Lösegefäß 1 bei einer Produkttemperatur von 90°C gelagert wird. Durch den Pumpenkopf 6.2 wird die AH-Salzlösung direkt aus dem Lösegefäß 1, über den Wärmetauscher 7 wie bereits im Ausführungsbeispiel 2 beschrieben, in den Druckreaktor 8 gefördert. Da kein ε-Caprolactam gefördert wird, ist der Kolbenhub des Pumpenkopfes 6.1 auf 0 gestellt.
Es folgt die gleiche technologische Einstellung und Verfahrensweise wie im Ausführungsbeispiel 2 beschrieben. Man erhält ein Vorkondensat mit einer Lösungsviskosität von 1,2 und aus dem Nachkondensationsreaktor 15 ein Polymerisat mit einer Lösungsviskosität von 2,4.
Da im Vorkondensat mehr Wasser physikalisch gelöst vorliegt, als in den Vorkondensaten der Ausführungsbeispiele 1 und 2, wird eine vergleichsweise größere Entgasungsfläche im Nachkondensator 15 notwendig. Das Produktniveau wird hier gegenüber Ausführungsbeispiel 2 noch weiter abgesenkt und durch Einspeisung von auf 280°C vorgewärmten Stickstoff die Wasserausgasung deutlich verbessert.

## Patentansprüche

1. Verfahren zur vereinheitlichten, kontinuierlichen
Herstellung von Polyamiden, wie Polyamid 6, Polyamid 6.6 und Copolyamiden aus ε-Caprolactam und/oder adipinsauren Hexamethylendiamin oder Adipinsäure und Hexamethylendiamin, unter Verwendung und Kombination der einzelnen Stufen aus den jeweiligen Einzelverfahren zu den Polyamidarten,
dadurch gekennzeichnet, daß alternierend Polyamid 6 oder Polyamid 6.6 oder Copolyamid in einer Reaktionseinrichtung hergestellt wird und dazu der zu behandelnde Ausgangsstoff ε-Caprolactam, adipinsaures Hexamethylendiamin, Adipinsäure und Hexamethylendiamin allein oder in Mischung gebracht, vorgewärmt in den Druckreaktor eingetragen und im Druckreaktor in Abhängigkeit von der Polyamidart mit variablen Drücken, Temperaturen und Verweilzeiten die Polymerisation vorgenommen wird, wobei ein Druck von 0,6 bis 2,1 MPa durch das im Reaktionsgemisch vorliegende Wasser erzeugt und die Temperatur im Bereich von 150 bis 280°C geregelt wird und nach Erfordernis eine Entwässerung des Vorkondensates der Polyamidarten bei gleichzeitiger Rückführung von Ausgangsprodukten über eine aufgesetzte Rektifizierkolonne durchgeführt wird und die Schmelze nachfolgend in mindestens einem Reaktor nachkondensiert wird, in dem eine Schmelzenniveaueinstellung in Abhängigkeit von dem Wasserüberschuß der Schmelze vorgenommen wird, und das im Überschuß in Vorpolymerisat oder Vorkondensat enthaltene Wasser bis auf einen Anteil ausgetrieben wird, der zur Einstellung der Endviskosität in der Schmelze verbleibt und die Einstellung eines Polymerisationsgleichgewichtes in der Nachkondensation bei einem Druck zwischen 0,1 und 0,15 MPa bei Temperaturen im Bereich 210 -285°C durchgeführt wird.

2. Verfahren nach Anspruch 1,
dadurch gekennzeichnet, daß in einem gemeinsamen Wärmetauscher der Ausgangsstoff oder das Stoffgemisch auch in Verbindung mit der für eine Teilverdampfung überschüssigen Wassers notwendigen Energie auf eine Temperatur von 190 bis 300°C vorgewärmt und in den Druckreaktor eingetragen wird.

3. Verfahren nach Anspruch 1 bis 2,
dadurch gekennzeichnet, daß für die Herstellung von Polyamid 6.6 und Copolyamiden eine wäßrige Lösung von adipinsaurem Hexamethylendiamin oder Adipinsäure und Hexamethylendiamin mit einem Wasseranteil ≤ 40% eingesetzt wird.

4. Verfahren nach Anspruch 1 bis 3,
dadurch gekennzeichnet, daß die Prozeßführung im Druckreaktor temperaturseitig in Abhängigkeit des Anteiles an Caprolactam- und adipinsaurem Hexamethylendiamin im Reaktionsprodukt definiert im Bereich zwischen 190 und 280°C vorgenommen wird, wobei minimal eine Reaktionsgemischeintrittstemperatur von 190°C bei 40% AH-Salzanteil und die Temperatur oberhalb von 230°C bei Steigerung des AH-Salzanteiles auf 75% und bei 90% AH-Salzanteil im Reaktionsgemisch eine Temperatur bis 250°C eingestellt wird.

5. Verfahren nach Anspruch 1 bis 4,
dadurch gekennzeichnet, daß bei der Herstellung von Copolyamid aus ε-Caprolactam mit einem Anteil von 1 bis 99% und wäßriger AH-Salzlösung erst bei einer Druckeinstellung > 0,6 MPa im Druckreaktor das überschüssige Wasser abgeführt wird.

6. Verfahren nach Anspruch 1 bis 5,
dadurch gekennzeichnet, daß die Entwässerung der polymeren Schmelze in einer eingängigen Rohrschlange durch gezielten langsamen Druckabbau und Wärmezuführung vorgenommen wird und durch diese das höherviskose Polyamid 6-Vorpolymerisat als auch das unter höherem Druck stehende Polyamid 6.6-Vorkondensat sowie das Copolymerisat in den Nachkondensator gefördert wird.

7. Verfahren nach Anspruch 1 bis 6,
dadurch gekennzeichnet, daß die Nachkondensation der polymeren Schmelze in mindestens einem gemeinsamen, senkrechten Reaktor bei Temperaturen im Bereich 210 bis 285°C und bei einem annähernd barometrischen Druck von oben nach unten vorgenommen wird, indem vom anliegenden Wasserüberschuß der eingetragenen Schmelze abhängig, bei Vorliegen eines hohen Wassergehaltes ein niedriges Produktniveau bei großer Entgasungsfläche eingestellt wird.

8. Vorrichtung zur Durchführung des Verfahrens nach den Ansprüchen 1 bis 7 zur vereinheitlichten, kontinuierlichen Herstellung von Polyamiden, insbesondere von Polyamid 6, Polyamid 6.6 und Copolyamiden aus ε-Caprolactam und/oder adipinsaurem Hexamethylendiamin oder Adipinsäure und Hexamethylendiamin, unter Verwendung und Kombination von Vorrichtungen aus den jeweiligen Einzelverfahren zu den Polyamidarten,
dadurch gekennzeichnet, daß dem Druckreaktor (8) ein Wärmetauscher(7) vorgeschaltet ist, der mit einer Förder- und Meßeinrichtung verbunden ist, welcher alternativ nachgeordnet sind -eine Löseeinrichtung für AH-Salz oder -ein Vorlagegefäß für AH-Salzlösung und/oder -ein Vorlagegefäß für ε-Caprolactam und auf dem Druckreaktor (8) eine mit diesem verbundene Rektifizierkolonne (10) mit einem Regelventil (11) und einer Kondensation und Abtauchung (12) sowie einer Zuführung für Wasser (9) angeordnet ist und der Druckreaktor (8) mittels beheizter Rohrleitung über eine Druckminder- und Fördereinrichtung (13) und eine Schmelzetrocknungsstrecke (14), die eine ein- bis fünfgängige Rohrschlange aufweist, mit dem Nachkondensationsreaktor (15), auf welchem in Wirkverbindung ein Rektifikator (17) mit Kondensation und Abtauchung (18) angeordnet ist und der einen Wärmetauscher für Stickstoff (16) mit Eintragseinrichtung und am Boden eine Austragspumpe (19) aufweist, verbunden ist.

9. Vorrichtung nach Anspruch 8,
dadurch gekennzeichnet, daß die Förder- und Meßeinrichtung einen Pumpenkopf für Lactam (6.1) und einen Pumpenkopf für AH-Salzlösung (6.2) mit einem gemeinsamen Antrieb aufweist, wobei der Pumpenkopf für AH-Salzlösung (6.2) über eine beheizte Rohrleitung einer Löseeinrichtung, bestehend aus Lösegefäß (1) mit Zwischengefäß für Wasser (4) und Behälter für AH-Salz (5) sowie Pumpe (2) am Ausgang des Lösegefäßes (1) und beheizter, über den Wärmetauscher (3) zurück in das Lösegefäß (1) geführter Ringleitung, nachgeordnet ist.

10. Vorrichtung nach Anspruch 8 bis 9,
dadurch gekennzeichnet, daß die Kühleinrichtung der Rektifizierkolonne (10) in den Rohrkreislauf des Vorlagen- oder Lösegefäßes (1) für AH-Salzlösung parallel eingebunden ist.

## Claims

1. Method for uniform, continuous production of polyamides such as polyamide 6, polyamide 6.6 and copolyamides derived from ε-caprolactam and/or adipic acid hexamethylene diamine or adipic acid and hexamethylene diamine, using and combining the various stages from the respective individual processes relating to the polyamide types,
characterised in that polyamide 6 or polyamide 6.6 or copolyamide is alternately produced in a reactor and to this end the starting substance to be treated, ε-caprolactam, adipic acid hexamethylene diamine, adipic acid and hexamethylene diamine alone or in admixture, are pre-heated and charged into the pressurised reactor and the polymerisation is undertaken in the pressurised reactor with variable pressures, temperatures and residence times in dependence on the type of polyamide; a pressure of 0.6 to 2.1 MPa is generated by the water present in the reaction mix and the temperature is regulated within the range 150 to 280 °C and according to the requirements concerned a dewatering of the precondensate of the polyamide types is carried out with simultaneous recycling of starting products via an added-on rectifying column and the melt is subsequently post-condensed in at least one reactor in which an adjustment of the melt level is undertaken in dependence on the excess water in the melt, and the excess water contained in the prepolymer or precondensate is expelled with the exception of a proportion which remains in the melt to adjust the final viscosity, and the adjustment of a polymerisation equilibrium is undertaken in the post-condensation operation at a pressure of between 0.1 and 0.15 MPa at temperatures within the range 210 to 285 °C.

2. Method according to claim 1,
characterised in that in a common heat exchanger the starting substance or mix of substances, is pre-heated to a temperature of 190 to 300 °C and charged into the pressurised reactor, in conjunction with the energy needed for partial evaporation of excess water.

3. Method according to claims 1 to 2,
characterised in that for the production of polyamide 6.6 and copolyamides an aqueous solution of adipic acid hexamethylene diamine or adipic acid and hexamethylene diamine with a water content ≤ 40% is employed.

4. Method according to claims 1 to 3,
characterised in that in terms of the temperature the process control in the pressurised reactor is undertaken within the range between 190 and 280 °C in a defined manner in dependence upon the proportion of caprolactam and adipic acid hexamethylene diamine in the reaction product, setting as a minimum condition a reaction mix entry temperature of 190°C for a 40% AH salt content and setting the temperature above 230°C for a raised AH salt content of 75% and setting a temperature of up to 250°C for a 90% AH salt content in the reaction mix.

5. Method according to claims 1 to 4,
characterised in that when producing copolyamide from ε-caprolactam with a content of 1 to 99% and aqueous AH salt solution the excess water is only taken off at a pressure setting > 0.6 MPa in the pressurised reactor.

6. Method according to claim 1 to 5,
characterised in that the dewatering of the polymer melt is undertaken in a coil with a single turn, by systematic slow reduction of pressure and supply of heat, and through this the higher-viscosity polyamide 6 precondensate is conveyed into the post-condenser, as is the polyamide 6.6 precondensate at a higher pressure and the copolymer.

7. Method according to claims 1 to 6,
characterised in that the post-condensation of the polymer melt is undertaken top-down in at least one common, vertical reactor at temperatures within the range 210 to 285 °C and at an approximately barometric pressure, by adjusting a low level of product with a large degassing surface, dependent upon the excess of water in the charged melt, when a high water content is present.

8. Apparatus for carrying out the method according to claims 1 to 7 for the uniform, continuous production of polyamides, more particularly polyamide 6, polyamide 6.6 and copolyamides derived from ε-caprolactam and/or adipic acid hexamethylene diamine or adipic acid and hexamethylene diamine, using and combining items of apparatus from the respective individual processes to give the polyamide types,
characterised in that arranged upstream of the pressurised reactor (8) is a heat exchanger (7) which is connected to a conveying and metering device, downstream of which the following are alternatively arranged: a solubilising device for AH salt or a receiving vessel for AH salt solution and/or a receiving vessel for ε-caprolactam and arranged on the pressurised reactor (8) is a rectifying column (10) connected thereto and having a regulating valve (11) and a condensation and immersion station (12) and also a supply line for water (9), and the pressurised reactor (8) is connected, by means of a heated pipe via a pressure reducing and conveying device (13) and a melt drying line (14) incorporating a coil with one to five turns, to the post-condensation reactor (15), arranged upon which a rectifier (17) with condensation and immersion stage (18) is operatively connected and which incorporates a heat exchanger for nitrogen (16) with a charging device and a discharge pump (19) in the floor.

9. Apparatus according to claim 8,
characterised in that the conveying and metering device incorporates a pump head for lactam (6.1) and a pump head for AH salt solution (6.2) sharing a common drive, the pump head for AH salt solution (6.2) being disposed downstream, via a heated pipe, of a solubilising device consisting of a solubilising vessel (1) with an intermediate vessel for water (4) and container for AH salt (5) and pump (2) at the outlet from the solubilising vessel (1) and a heated ring line running via the heat exchanger (3) back into the solubilising vessel (1).

10. Apparatus according to claims 8 and 9,
characterised in that the cooling device of the rectifying column (10) is incorporated in parallel in the pipe circuit of the receiving or solubilising vessel (1) for AH salt solution.

## Revendications

1. Procédé pour la production continue standardisée de polyamides tels que le polyamide 6, le polyamide 6,6 et le copolyamides à base d'ε-caprolactame et/ou à base d'adipate d'hexaméthylènediamine ou d'acide adipique et d'hexaméthylènediamine, utilisant et combinant différentes étapes de chacun des procédés particuliers aux différents types de polyamides, caractérisé par le fait que l'on produit en alternance du polyamide 6 ou du polyamide 6,6 ou du copolyamide dans un réacteur et que l'on introduit pour cela les matières premières que sont l'ε-caprolactame, l'adipate d'hexaméthylènediamine, l'acide adipique et l'hexaméthylènediamine, seuls ou sous forme de mélange, à l'état préchauffé dans le réacteur pressurisé et que l'on effectue la polymérisation dans le réacteur pressurisé sous différentes conditions de pression, de température et de durée qui dépendent du type de polyamide à préparer, la pression, comprise entre 0,6 et 2,1 MPa, étant due à l'eau présente dans le mélange réactionnel et la température étant ajustée à une valeur comprise entre 150 et 280 °C, et que l'on réalise selon les besoins une déshydratation du précondensat des différents types de polyamides tout en réintroduisant les réactifs de départ via une colonne de rectification, et que l'on procède à une postcondensation du polymère fondu dans au moins un réacteur, dans lequel le niveau de la masse fondue est ajusté en fonction de l'excès d'eau qu'elle contient, et que l'on élimine l'excès d'eau contenu dans le prépolymère ou dans le précondensat jusqu'à une teneur en eau nécessaire pour l'obtention de la viscosité finale de la masse fondue, et que l'ajustement de l'équilibre de polymérisation dans l'étape de postcondensation est réalisé à une pression comprise entre 0,1 et 0,15 MPa à des températures comprises entre 210 et 285 °C.

2. Procédé selon la revendication 1, caractérisé par le fait que l'on chauffe les réactifs ou le mélange de produits dans un échangeur de chaleur commun à une température compris entre 190 °C et 300 °C de manière à fournir l'énergie nécessaire pour l'évaporation partielle de l'eau en excès, et qu'on les introduit dans le réacteur pressurisé.

3. Procédé selon la revendication 1 à 2, caractérisé par le fait que l'on utilise pour la préparation de polyamide 6,6 et des copolyamides une solution aqueuse d'adipate d'hexaméthylènediamine ou d'acide adipique et d'hexaméthylènediamine ayant une teneur en eau supérieure ou égale à 40 %.

4. Procédé selon la revendication 1 à 3, caractérisé par le fait que la température du procédé dont la variation en cours de procédé est définie en fonction de la proportion de caprolactame et d'adipate d'hexaméthylènediamine dans le mélange réactionnel, est comprise entre 190 et 280 °C, la température minimale d'entrée du mélange de réactifs étant égale à 190 °C pour une fraction de sel AH de 40 %, et la température étant supérieure à 230 °C lorsque la proportion en sel AH augmente jusqu'à 75 %, et la température étant ajustée à 250 °C pour une proportion de sel AH de 90 %.

5. Procédé selon la revendication 1 à 4, caractérisé par le fait que lors de la préparation de copolyamides à partir d'ε-caprolactame et de 1 à 99 % d'une solution aqueuse de sel AH, on ne procède à l'élimination de l'eau en excès qu'à partir d'une pression dans le réacteur pressurisée supérieure à 0,6 MPa.

6. Procédé selon la revendication 1 à 5, caractérisé par le fait que la déshydratation du polymère fondu se fait dans un serpentin simple par une détente lente et contrôlée et apport de chaleur et que ce serpentin amène le prépolymère de polyamide 6 de viscosité élevée, le précondensat de polyamide 6,6 sous haute pression, ainsi que le copolymère, dans le réacteur de post-condensation.

7. Procédé selon la revendication 1 à 6, caractérisé par le fait que la post-condensation du polymère fondu se fait dans au moins un réacteur commun vertical à des températures comprises entre 210 et 285 °C et à une pression proche de la pression atmosphérique avec un écoulement du haut vers le bas, et que l'on ajuste le niveau de produit en fonction de l'excès d'eau présent dans le polymère fondu, le niveau étant d'autant plus bas et la surface de dégazage d'autant plus élevée que la teneur en eau est importante.

8. Dispositif pour la mise en oeuvre d'un procédé selon les revendications 1 à 7, permettant la production continue standardisée de polyamides, en particulier de polyamide 6, de polyamide 6,6 et de copolyamides à partir d'ε-caprolactame et/ou d'adipate d'hexaméthylènediamine ou d'acide adipique et d'hexaméthylènediamine, utilisant et combinant des dispositifs des procédés de production de ces différents types de polyamide, caractérisé par le fait que le réacteur pressurisé (8) est précédé d'un échangeur de chaleur (7) qui est relié à un dispositif de pompage et de dosage en aval duquel se trouvent
- soit un dispositif de dissolution de sel AH,
- soit un réservoir de solution de sel AH et/ou un réservoir d'ε-caprolactame,
et que sont disposés au dessus du réacteur pressurisé (8) une colonne de rectification (10) reliée à celui-ci, pourvue d'une vanne de régulation (11) et d'un dispositif de condensation (12), ainsi qu'une arrivée d'eau (9), et que le réacteur pressurisé (8) est relié par l'intermédiaire de conduites tubulaires chauffées via un dispositif de détente et de transport (13) et une zone de séchage du polymère fondu (14) comprenant un serpentin à 1 à 5 boucles, au réacteur de post-condensation (15) lequel réacteur est muni d'une colonne de rectification (17) avec un dispositif de condensation (18), d'un échangeur de chaleur pour l'azote (16) et d'un dispositif d'introduction, et, à son pied, d'une pompe de sortie (19).

9. Dispositif selon la revendication 8, caractérisé par le fait que le dispositif de pompage et de dosage comporte une tête de pompe pour le lactame (6.1) et une tête de pompe pour la solution de sel AH (6.2) entraînées par un même moteur, la tête de pompe 6.2 pour la solution de sel AH étant montée en aval d'un dispositif de dissolution comprenant un récipient de solution (1) constitué d'un récipient intermédiaire pour l'eau (4), d'un récipient pour le sel AH (5), ainsi qu'une pompe (2) en sortie du récipient de dissolution (1), et une conduite circulaire chauffée retournant via l'échangeur de chaleur (3) vers le récipient de dissolution (1).

10. Dispositif selon la revendication 8 à 9, caractérisé par le fait que le dispositif de refroidissement de la colonne de rectification (10) est intégré parallèlement dans le circuit des conduites du réservoir ou du récipient de dissolution de sel AH (1).
